# EUROPÄISCHE PATENTSCHRIFT

(11) **EP 3 380 357 B1**
(45) Veröffentlichungstag und Bekanntmachung des Hinweises auf die Patenterteilung: **29.09.2021**
(21) Anmeldenummer: 16797730.5
(22) Anmeldetag: 26.10.2016
(51) Int. Cl.: B60K 35/00, B60W 50/14, G06K 9/00, B60W 50/00

(54) **FAHRERASSISTENZSYSTEM MIT ADAPTIVER UMGEBUNGSBILDDATENVERARBEITUNG**
DRIVER ASSISTANCE SYSTEM FEATURING ADAPTIVE PROCESSING OF IMAGE DATA OF THE SURROUNDINGS
SYSTÈME D'AIDE À LA CONDUITE POURVU D'UN DISPOSITIF DE TRAITEMENT ADAPTATIF DE DONNÉES D'IMAGES

(30) Priorität: 24.11.2015 DE 102015223175
(43) Veröffentlichungstag der Anmeldung: 03.10.2018
(73) Patentinhaber: Conti Temic microelectronic GmbH, 90411 Nürnberg (DE)
(72) Erfinder: FRIEBE, Markus, 95482 Gefrees (DE)
(74) Vertreter: Continental Corporation
(86) Internationale Anmeldenummer: PCT/DE2016/200493
(87) Internationale Veröffentlichungsnummer: WO 2017/088865

(56) Entgegenhaltungen:
- DE-A1-102009 020 328
- DE-A1-102013 010 010
- DE-A1-102013 213 039
- DE-A1-102013 220 662
- US-A- 5 179 441

## Beschreibung

Die Erfindung betrifft ein Verfahren und eine Vorrichtung zur Bilddatenverarbeitung eines Umgebungsbildes der Fahrzeugumgebung eines Fahrzeuges.

Fahrzeuge, insbesondere Straßenfahrzeuge, verfügen zunehmend über Fahrerassistenzsysteme, welche Fahrer bei der Durchführung von Fahrmanövern unterstützen. Derartige Fahrerassistenzsysteme verfügen über eine Anzeige bzw. ein Display, welches dem Fahrer ein Umgebungsbild seines Fahrzeuges anzeigt. Ein derartiges Umgebungsbild kann eine Rundumansicht der um das Fahrzeug herum gelegenen Umgebung anzeigen, beispielsweise aus einer Vogelperspektive. Zum Erzeugen eines solchen Umgebungsbildes verfügt das Fahrzeug an verschiedenen Seiten der Fahrzeugkarosserie über Fahrzeugkameras, die Kamerabilder liefern. Diese Kamerabilder werden durch eine Datenverarbeitungseinheit zu einem Umgebungsbild bzw. einer Rundumansicht der Fahrzeugumgebung zusammengesetzt. Dieses zusammengesetzte Bild wird anschließend auf einer Anzeigeeinheit des Fahrerassistenzsystems angezeigt.

In der Fahrzeugumgebung des Fahrzeuges befinden sich in vielen Fällen Objekte bzw. Hindernisse, beispielsweise Gebäude oder andere Fahrzeuge, die zu Verzerrungen bei den angezeigten Umgebungsbildern führen. Diese Verzerrungen können beispielsweise zu einer Fehleinschätzung der Verkehrssituation durch den Fahrer des Fahrzeuges führen und somit die Sicherheit bei der Durchführung der Fahrmanöver beeinträchtigen.

Druckschrift DE 10 2013 010 010 A1 beschreibt Verfahren zum Betrieb eines Fahrerassistenzsystems zum Rangieren und/oder Parken, bei denen ein dreidimensionales Umgebungsmodell ermittelt wird, welches im Anschluss für eine Darstellung auf einer Anzeigevorrichtung verwendet wird. Druckschrift US 5,179,441 A beschreibt ein Stereo-Vision-System für ein Roboterfahrzeug.

Es ist daher eine Aufgabe der vorliegenden Erfindung, ein Fahrerassistenzsystem und ein Verfahren zur Bilddatenverarbeitung des Umgebungsbildes der Fahrzeugumgebung eines Fahrzeuges zu schaffen, bei der durch Objekte hervorgerufene Bildverzerrungen innerhalb des angezeigten Umgebungsbildes weitgehend vermieden bzw. beseitigt werden.

Diese Aufgabe wird erfindungsgemäß durch ein Fahrerassistenzsystem mit den in Patentanspruch 1 angegebenen Merkmalen gelöst.

Die Erfindung schafft demnach ein Fahrerassistenzsystem zur Anzeige eines Umgebungsbildes für ein Fahrzeug mit Fahrzeugkameras, welche Kamerabilder einer Fahrzeugumgebung des Fahrzeuges erzeugen; und mit
einer Datenverarbeitungseinheit, welche die von den Fahrzeugkameras erzeugten Kamerabilder zu einem Umgebungsbild der Fahrzeugumgebung zusammensetzt,
wobei für mindestens ein innerhalb des Umgebungsbildes enthaltenes Objekt ein zugehöriger Bildbereich adaptiv gefiltert wird.

Das zusammengesetzte Umgebungsbild wird mit den verarbeiteten Bildbereichen auf einer Anzeigeeinheit des Fahrerassistenzsystems angezeigt.

Bei einer möglichen Ausführungsform des erfindungsgemäßen Fahrerassistenzsystems wird der zu einem Objekt zugehörige Bildbereich durch ein Polygon gebildet, dessen Eckpunkte Koordinaten eines zwei- oder dreidimensionalen Fahrzeugkoordinatensystems des Fahrzeuges sind.

Bei einer weiteren möglichen Ausführungsform des erfindungsgemäßen Fahrerassistenzsystems wird der zu einem Objekt zugehörige Bildbereich durch ein Umfelddatenmodell der Fahrzeugumgebung des Fahrzeuges bestimmt.

Bei einer weiteren möglichen Ausführungsform des erfindungsgemäßen Fahrerassistenzsystems wird der zu einem Objekt zugehörige Bildbereich durch einen Nutzer des Fahrerassistenzsystems über eine Nutzerschnittstelle festgelegt.

Bei einer weiteren möglichen Ausführungsform des erfindungsgemäßen Fahrerassistenzsystems kann der zu dem Objekt zugehörige Bildbereich beispielsweise hochpass- oder tiefpassgefiltert werden.

Bei einer weiteren möglichen Ausführungsform des erfindungsgemäßen Fahrerassistenzsystems wird der zu einem Objekt zugehörige Bildbereich mit einer vorgegebenen Textur überdeckt.

Bei einer weiteren möglichen Ausführungsform des erfindungsgemäßen Fahrerassistenzsystems wird ein innerhalb des Umgebungsbildes enthaltenes Objekt anhand eines sensorisch erfassten Höhenprofils der Fahrzeugumgebung des Fahrzeuges erkannt.

Bei einer weiteren möglichen Ausführungsform des erfindungsgemäßen Fahrerassistenzsystems wird ein innerhalb des Umgebungsbildes enthaltenes Objekt durch die Datenverarbeitungseinheit klassifiziert und die anschließende adaptive Bildverarbeitung des zu dem jeweiligen Objekt zugehörigen Bildbereichs erfolgt durch die Datenverarbeitungseinheit in Abhängigkeit von der ermittelten Klasse des Objektes.

Bei einer weiteren möglichen Ausführungsform des erfindungsgemäßen Fahrerassistenzsystems erfolgt die adaptive Bildverarbeitung des zu einem Objekt zugehörigen Bildbereichs in Abhängigkeit von einem Abstand des Bildbereichs zu einem Koordinatenursprung eines zwei- oder dreidimensionalen Fahrzeugkoordinatensystems durch die Datenverarbeitungseinheit des Fahrerassistenzsystems.

Die Erfindung schafft ferner ein Verfahren zur Bilddatenverarbeitung eines Umgebungsbildes der Fahrzeugumgebung eines Fahrzeuges zur Anzeige des Umgebungsbildes auf einer Anzeigeeinheit eines Fahrerassistenzsystems des Fahrzeugs mit den in Patentanspruch 10 angegebenen Merkmalen.

Die Erfindung schafft demnach ein Verfahren zur Bilddatenverarbeitung eines Umgebungsbildes der Fahrzeugumgebung eines Fahrzeuges zur Anzeige des Umgebungsbildes auf einer Anzeigeeinheit eines Fahrerassistenzsystems des Fahrzeugs mit den Schritten:
Zusammensetzen von Kamerabildern, die von Fahrzeugkameras des Fahrzeuges erzeugt werden, zu einem Umgebungsbild der Fahrzeugumgebung des Fahrzeuges,

Durchführen einer adaptiven Bildverarbeitung bei mindestens einem Bildbereich, welcher zu einem innerhalb des zusammengesetzten Umgebungsbildes enthaltenen Objekt gehört, und Anzeigen des zusammengesetzten Umgebungsbilds mit den verarbeiteten Bildbereichen auf der Anzeigeeinheit des Fahrerassistenzsystems.

Bei einer möglichen Ausführungsform des erfindungsgemäßen Verfahrens wird das zusammengesetzte Umgebungsbild mit den adaptiv verarbeiteten Bildbereichen der verschiedenen Objekte auf einer Anzeigeeinheit angezeigt.

Bei einer weiteren möglichen Ausführungsform des erfindungsgemäßen Verfahrens wird der zu einem Objekt zugehörige Bildbereich durch ein Polygon gebildet, dessen Eckpunkte durch Koordinaten eines zwei- oder dreidimensionalen Fahrzeugkoordinatensystems des Fahrzeuges gebildet werden.

Bei einer weiteren möglichen Ausführungsform des erfindungsgemäßen Verfahrens wird der zu einem Objekt zugehörige Bildbereich durch ein Umfelddatenmodell der Fahrzeugumgebung des Fahrzeuges bestimmt.

Bei einer weiteren möglichen Ausführungsform des erfindungsgemäßen Verfahrens wird der zu einem Objekt zugehörige Bildbereich durch einen Nutzer des Fahrerassistenzsystems über eine Nutzerschnittstelle festgelegt.

Bei einer weiteren möglichen Ausführungsform des erfindungsgemäßen Verfahrens wird der zu einem Objekt zugehörige Bildbereich hochpass- oder tiefpassgefiltert.

Bei einer weiteren möglichen Ausführungsform des erfindungsgemäßen Verfahrens wird der zu einem Objekt zugehörige Bildbereich mit einer vorgegebenen zugehörigen Textur überdeckt. Bei einer weiteren möglichen Ausführungsform des erfindungsgemäßen Verfahrens wird ein innerhalb des Umgebungsbildes enthaltenes Objekt anhand eines sensorisch erfassten Höhenprofils der Fahrzeugumgebung des Fahrzeuges erkannt.

Bei einer weiteren möglichen Ausführungsform des erfindungsgemäßen Verfahrens wird ein innerhalb des Umgebungsbildes enthaltenes Objekt zunächst klassifiziert.

Bei einer weiteren möglichen Ausführungsform des erfindungsgemäßen Verfahrens erfolgt eine adaptive Bildverarbeitung des zu einem Objekt zugehörigen Bildbereichs in Abhängigkeit von der ermittelten Klasse des Objektes.

Bei einer weiteren möglichen Ausführungsform des erfindungsgemäßen Verfahrens erfolgt die adaptive Bildverarbeitung des zu einem Objekt zugehörigen Bildbereichs in Abhängigkeit von einem Abstand des Bildbereichs oder des zugehörigen Objektes zu einem Koordinatenursprung eines zwei- oder dreidimensionalen Fahrzeugkoordinatensystems des Fahrzeuges.

Im Weiteren werden mögliche Ausführungsformen des erfindungsgemäßen Verfahrens und des erfindungsgemäßen Fahrerassistenzsystems unter Bezugnahme auf die beigefügten Figuren näher erläutert.

Es zeigen:
- Figur 1: ein Blockschaltbild zur Darstellung eines Ausführungsbeispiels eines erfindungsgemäßen Fahrerassistenzsystems zur Anzeige eines Umgebungsbildes;
- Figur 2: eine schematische Darstellung zur Erläuterung der Funktionsweise des erfindungsgemäßen Fahrerassistenzsystems und des erfindungsgemäßen Verfahrens zur Bilddatenverarbeitung eines Umgebungsbildes der Fahrzeugumgebung eines Fahrzeuges;
- Figur 3: ein einfaches Ablaufdiagramm zur Darstellung eines Ausführungsbeispiels des erfindungsgemäßen Verfahrens zur Bilddatenverarbeitung.

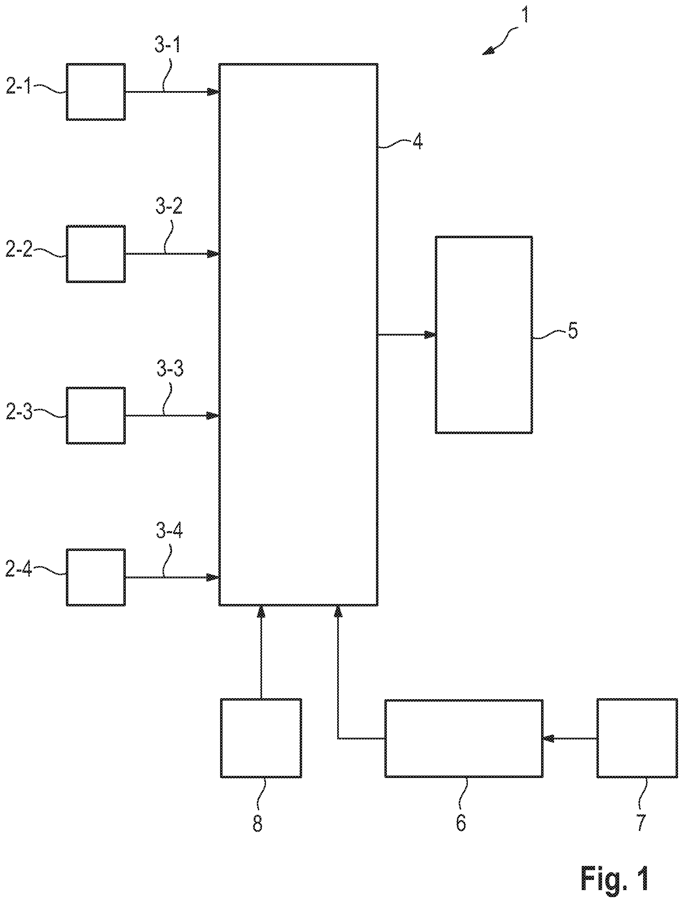

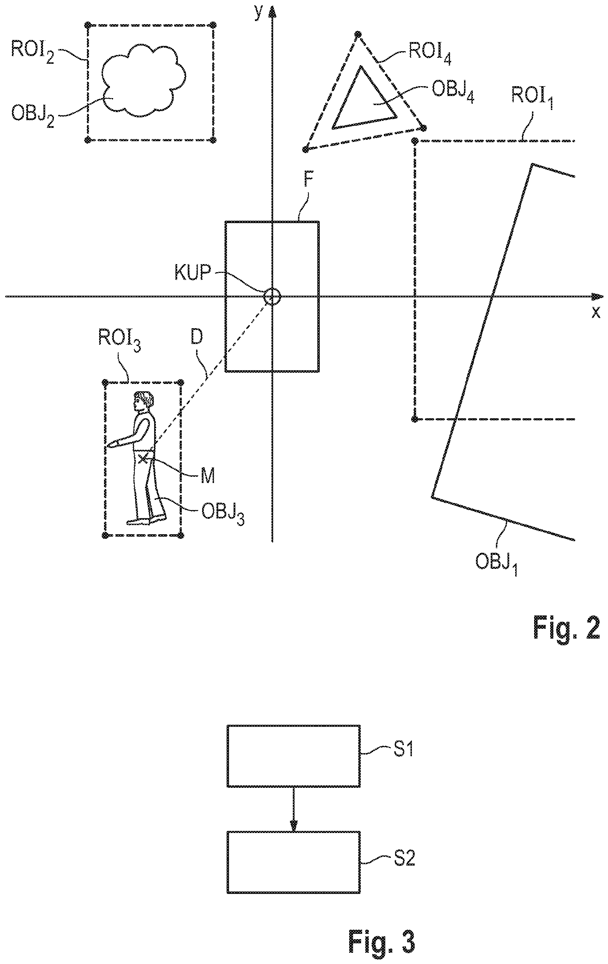

Figur 1 zeigt ein Blockschaltbild zur Darstellung eines exemplarischen Ausführungsbeispiels eines erfindungsgemäßen Fahrerassistenzsystems 1 zur Anzeige eines Umgebungsbildes für ein Fahrzeug. Das in Figur 1 dargestellte Fahrerassistenzsystem 1 kann beispielsweise in einem Straßenfahrzeug vorgesehen sein, wie es schematisch oben in Figur 2 dargestellt ist. Bei dem in Figur 1 dargestellten Ausführungsbeispiel verfügt das Fahrzeug über mehrere Fahrzeugkameras bzw. optische Sensoren 2-1, 2-2, 2-3, 2-4, die an verschiedenen Seiten der Fahrzeugkarosserie des Fahrzeuges angebracht sind.

Die Anzahl der vorgesehenen Fahrzeugkameras kann für verschiedene Fahrzeuge variieren. Bei einer möglichen Ausführungsform weist das Fahrzeug vier Fahrzeugkameras auf, die an verschiedenen Seiten der Fahrzeugkarosserie vorgesehen sind.

Dabei wird vorzugsweise jeweils eine Fahrzeugkamera an jeder Seite der Fahrzeugkarosserie vorgesehen, d.h. eine erste Fahrzeugkamera 2-1 an der Vorderseite der Fahrzeugkarosserie, eine zweite Fahrzeugkamera 2-2 an der linken Seite der Fahrzeugkarosserie, eine dritte Fahrzeugkamera 2-3 an der rechten Seite der Fahrzeugkarosserie und eine vierte Fahrzeugkamera 2-4 an der Hinterseite der Fahrzeugkarosserie. Die verschiedenen Fahrzeugkameras 2-i liefern kontinuierlich Kamerabilder der Fahrzeugumgebung, die über Signalleitungen 3-1, 3-2, 3-3, 3-4 an eine Datenverarbeitungseinheit 4 des Fahrerassistenzsystems 1 übertragen werden. Bei einer möglichen Ausführungsform verfügen die Fahrzeugkameras 2-i über Datenencoder, um die Kamerabilder in kodierter Form über die Signalleitungen 3-i zu der Datenverarbeitungseinheit 4 zu übertragen. Die Datenverarbeitungseinheit 4 verfügt bei einer möglichen Ausführungsform über einen oder mehrere Prozessoren zur Bilddatenverarbeitung. Die Datenverarbeitungseinheit 4 setzt die empfangenen von den Fahrzeugkameras 2-i stammenden Kamerabilder fortlaufend zu einem Umgebungsbild der Fahrzeugumgebung des Fahrzeuges zusammen. Dabei wird für mindestens ein innerhalb des Umgebungsbildes enthaltenes Objekt ein zugehöriger Bildbereich adaptiv verarbeitet. Der zugehörige Bildbereich ROI (Region of Interest) wird einer adaptiven Bildverarbeitung durch die Datenverarbeitungseinheit 4 unterzogen. Das von der Datenverarbeitungseinheit 4 zusammengesetzte Umgebungsbild der Fahrzeugumgebung wird mit den darin enthaltenen verarbeiteten Bildbereichen auf einer Anzeigeeinheit 5 des Fahrerassistenzsystems 1 angezeigt.

Der zu einem Objekt zugehörige Bildbereich ROI wird vorzugsweise durch ein Polygon mit mehreren Eckpunkten gebildet. Beispielsweise kann es sich bei dem Polygon um ein Viereck mit vier Eckpunkten oder ein Dreieck mit drei Eckpunkten handeln. Die Eckpunkte des Polygons werden dabei vorzugsweise durch Koordinaten eines Fahrzeugkoordinatensystems des Fahrzeuges gebildet. Dieses Fahrzeugkoordinatensystem hat vorzugsweise seinen Koordinatenursprungspunkt KUP in der Mitte des Fahrzeuges F, wie in Figur 2 schematisch dargestellt. Figur 2 zeigt ein zweidimensionales Fahrzeugkoordinatensystem mit einer ersten Fahrzeugkoordinate x und einer zweiten Fahrzeugkoordinate y. Bei einer bevorzugten alternativen Ausführungsform kann das Fahrzeugkoordinatensystem des Fahrzeuges F auch ein dreidimensionales Fahrzeugkoordinatensystem mit drei Fahrzeugkoordinaten x, y, z umfassen.

Bei einer möglichen Ausführungsform des erfindungsgemäßen Fahrerassistenzsystems 1 wird der zu einem Objekt zugehörige Bildbereich ROI durch ein Umfelddatenmodell der Fahrzeugumgebung des Fahrzeuges bestimmt. Dieses Umfelddatenmodell wird beispielsweise durch einen Umfelddatenmodellgenerator 6 erzeugt. Hierzu ist der Umfelddatenmodellgenerator 6 an mindestens einen Umfelddatensensor 7, beispielsweise Ultraschallsensoren, angeschlossen. Diese Sensoren liefern Daten hinsichtlich des Höhenprofils der Fahrzeugumgebung des Fahrzeuges. Beispielsweise wird eine Bordsteinkante oder ein Gebäude als Objekt bzw. Fahrzeughindernis erkannt und die sensorisch ermittelte Höhe des Objektes relativ zu einem Bezugsniveau, beispielsweise dem Straßenniveau, ermittelt. Der Umfelddatenmodellgenerator 6 generiert aus den empfangenen Sensordaten ein Umfelddatenmodell, wobei die Datenverarbeitungseinheit 4 in Abhängigkeit von dem erzeugten Umfelddatenmodell Objekte innerhalb des zusammengesetzten Umgebungsbildes erkennt und zu den erkannten Objekten zugehörige Bildbereiche innerhalb des Umgebungsbildes bestimmt bzw. berechnet.

Alternativ können die zu den Objekten zugehörigen Bildbereiche durch einen Nutzer des Fahrerassistenzsystems 1 über eine Nutzerschnittstelle 8 des Fahrerassistenzsystems 1 festgelegt bzw. selektiert werden. Bei einer möglichen Ausführungsform verfügt das Fahrerassistenzsystem 1 über eine Touchscreen-Anzeige 5 zur Anzeige des zusammengesetzten bearbeiteten Umgebungsbildes mit einer darin integrierten Nutzerschnittstelle zur Selektion von Bildbereichen ROI innerhalb des Umgebungsbildes.

Bei einer möglichen Ausführungsform des erfindungsgemäßen Fahrerassistenzsystems 1 wird ein zu einem Objekt zugehöriger Bildbereich ROI automatisch gefiltert, beispielsweise hochpassgefiltert oder tiefpassgefiltert. Die Filterung der Bilddaten des zusammengesetzten Umgebungsbildes innerhalb der festgelegten Bildbereiche erfolgt durch die Datenverarbeitungseinheit 4 entsprechend einem adaptiven Bilddatenverarbeitungsalgorithmus.

Bei einer alternativen Ausführungsform kann ein zu einem Objekt zugehöriger Bildbereich auch mit einer vorgegebenen Textur überdeckt werden. Bei einer möglichen Ausführungsform hat der Nutzer die Möglichkeit, die entsprechende Textur zu konfigurieren bzw. aus einer Gruppe von vorgegebenen Texturen auszuwählen.

Bei einer weiteren möglichen Ausführungsform des erfindungsgemäßen Fahrerassistenzsystems 1 wird ein innerhalb des Umgebungsbildes enthaltenes Objekt, beispielsweise ein Gebäude oder ein Baum, klassifiziert und die darauffolgende adaptive Bildverarbeitung des zu dem Objekt zugehörigen Bildbereichs erfolgt in Abhängigkeit zu der ermittelten Klasse des Objektes. Bei einer weiteren möglichen Ausführungsform des erfindungsgemäßen Fahrerassistenzsystems 1 erfolgt die adaptive Bildverarbeitung des zu einem Objekt zugehörigen Bildbereichs ROI durch die Datenverarbeitungseinheit 4 in Abhängigkeit von einem Abstand des jeweiligen Bildbereichs zu dem Koordinatenursprung KUP des Fahrzeugkoordinatensystems des jeweiligen Fahrzeuges F. Beispielsweise werden Bildbereiche ROI, die sich weiter entfernt von dem Koordinatenursprung KOP befinden, einem anderen Bilddatenverarbeitungsalgorithmus unterzogen, als Bildbereiche ROI, die näher an dem Koordinatenursprung KUP des Fahrzeugkoordinatensystems liegen.

Figur 2 dient zur Erläuterung der Funktionsweise des erfindungsgemäßen Fahrerassistenzsystems 1 und des erfindungsgemäßen Verfahrens zur Bilddatenverarbeitung des Umgebungsbildes der Fahrzeugumgebung. In Figur 2 ist schematisch ein Fahrzeug F dargestellt, welches über ein Fahrerassistenzsystem 1 gemäß der Erfindung verfügt. In der Mitte des Fahrzeuges F, beispielsweise eines Straßenfahrzeuges, befindet sich ein Koordinatenursprung KUP eines zwei- oder dreidimensionalen Fahrzeugkoordinatensystems. Bei dem in Figur 2 dargestellten Beispiel befinden sich in der Fahrzeugumgebung des Fahrzeuges F verschiedene Objekte OBJ1, OBJ2, OBJ3, OBJ4. Bei dem Objekt OBJ1 handelt es sich beispielsweise um ein Gebäude in der Fahrzeugumgebung des Fahrzeuges F. Das Objekt OBJ2 ist beispielsweise ein Baum, welcher sich vorne links vor dem Fahrzeug F befindet. Weiterhin ist in Figur 2 ein mobiles Objekt OBJ3 in Form eines Passanten dargestellt. Schließlich ist in Figur 2 ein viertes Objekt OBJ4 dargestellt, das ein dreieckförmiges Hindernis darstellt, beispielsweise eine Absperrung oder dergleichen. Für jedes der verschiedenen Objekte OBJ1, OBJ2, OBJ3, OBJ4 wird ein zugehöriger Bildbereich ROI1, ROI2, ROI3, ROI4 bestimmt. Die Ermittlung des zugehörigen Bildbereichs erfolgt entweder automatisch auf Basis eines generierten Umfelddatenmodells der Fahrzeugumgebung oder manuell durch Eingabe eines Nutzers des Fahrerassistenzsystems 1 über eine Nutzerschnittstelle 8. Bei einer weiteren möglichen Ausführungsform werden die zugehörigen Bildbereiche teilweise auf Basis eines Umfelddatenmodells bestimmt und teilweise von einem Nutzer über eine Nutzerschnittstelle 8 eingegeben. Die in der Fahrzeugumgebung befindlichen Objekte können feste Objekte umfassen, beispielsweise Gebäude, Bäume oder Absperreinheiten, aber auch bewegliche Objekte, beispielsweise Passanten oder andere Fahrzeuge in der Fahrzeugumgebung des Fahrzeuges F. Die zugehörigen Bildbereiche ROI können die betreffenden Objekte umschließen, beispielsweise die Bildbereiche ROI2, ROI3 und ROI4 oder auch nur partiell abdecken, wie beispielsweise der Bildbereich ROI1. Bei einer bevorzugten Ausführungsform des erfindungsgemäßen Fahrerassistenzsystems 1 werden die zugehörigen Bildbereiche ROI durch Polygone mit mehreren Ecken bzw. Eckpunkten gebildet, die Koordinaten des zwei- oder dreidimensionalen Fahrzeugkoordinatensystems sind. Die polygonalen Bildbereiche umfassen beispielsweise zwei, drei, vier oder mehr Eckpunkte eines zweidimensionalen Polygons oder eines zweidimensionalen polygonen Körpers. Bei einer möglichen bevorzugten Ausführungsform wird die Anzahl der Eckpunkte bzw. die Form des Polygons oder des polygonen Körpers von dem jeweiligen Objekt abgeleitet. Bei einer möglichen Ausführungsform ist ein in dem Umgebungsbild enthaltenes Objekt OBJ klassifiziert. Beispielsweise wird das Objekt OBJ2 in dem dargestellten Beispiel als Baum klassifiziert. Weiterhin kann beispielsweise das Objekt OBJ1 als starres Gebäude klassifiziert werden. Abhängig von der ermittelten Klasse des Objektes OBJ kann bei einer möglichen Ausführungsform die Form des zugehörigen Bildbereichs abgeleitet werden. Beispielsweise ist das Objekt OBJ4 als dreieckförmige Sperre klassifiziert, wird ein dreieckiger zugehöriger Bildbereich ROI4 ermittelt. Bei einer weiteren bevorzugten Ausführungsform des erfindungsgemäßen Fahrerassistenzsystems 1 und des erfindungsgemäßen Verfahrens zur Bilddatenverarbeitung erfolgt die adaptive Bildverarbeitung des zu dem Objekt OBJ zugehörigen Bildbereichs ROI ebenfalls in Abhängigkeit von der ermittelten Klasse des Objektes OBJ durch die Datenverarbeitungseinheit 4. Beispielsweise kann der Bildbereich ROI2 des klassifizierten Objektes Baum (Objekt OBJ2) einem ersten Bilddatenverarbeitungsalgorithmus unterzogen werden, während der Bildbereich ROI3 des klassifizierten Objektes OBJ3 (Passant) einem anderen Bilddatenverarbeitungsalgorithmus unterzogen wird. Beispielsweise kann der Bildbereich ROI2 des Objektes OBJ2 (Baum) durch die Datenverarbeitungseinheit 4 hochpassgefiltert werden, während das klassifizierte Objekt OBJ3 (Passant) tiefpassgefiltert wird. Weiterhin kann beispielsweise das als Gebäude klassifizierte Objekt OBJ1 mit einer zugehörigen Gebäudetextur überdeckt werden, beispielsweise rotschraffiert oder dergleichen. Verschiedene Texturen können verschiedenen Objekttypen bzw. Objektklassen zugeordnet sein. Beispielsweise hat die Datenverarbeitungseinheit 4 des Fahrerassistenzsystems 1 bei einer möglichen Ausführungsform Zugriff auf einen Konfigurationsdatenspeicher, in dem verschiedenen Objekttypen verschiedene Texturenmuster bzw. Texturflächen zugeordnet sind. Bei einer weiteren möglichen Ausführungsform hat der Nutzer des Fahrerassistenzsystems 1 über die Nutzerschnittstelle 8 die Möglichkeit, eine für ihn geeignete Konfiguration der Texturmuster und/oder Bildbereichalgorithmen für verschiedene Objekte vorzunehmen.

Bei einer weiteren möglichen Ausführungsform des erfindungsgemäßen Fahrerassistenzsystems 1 und des erfindungsgemäßen Verfahrens zur Bilddatenverarbeitung erfolgt die adaptive Bildverarbeitung des zu einem Objekt OBJ zugehörigen Bildbereichs ROI in Abhängigkeit von einem Abstand des jeweiligen Bildbereichs zu dem Koordinatenursprung KUP des Fahrzeugkoordinatensystems. Beispielsweise wird der zu dem Koordinatenursprung KUP näher gelegene Bildbereich ROI4 mit einem ersten Bilddatenverarbeitungsalgorithmus behandelt als der etwas weiter entfernt gelegene Bildbereich ROI1 des Objektes OBJ1 (Gebäude). Bei einer möglichen Ausführungsform kann sich ein Objekt, beispielsweise das Objekt OBJ3 (Passant), innerhalb des Koordinatensystems des Fahrzeuges bewegen, wobei sich das jeweilige Objekt OBJ dem Koordinatenursprung KUP des Fahrzeugkoordinatensystems annähert oder sich von dem Koordinatenursprung KUP des Fahrzeugkoordinatensystems entfernt. Bei einer möglichen Ausführungsform des erfindungsgemäßen Verfahrens und des erfindungsgemäßen Fahrerassistenzsystems 1 wird ein Abstand bzw. eine Distanz D zwischen einem Mittelpunkt M eines Bildbereichs ROI, welcher zu einem beweglichen Objekt gehört, und dem Koordinatenursprung KUP berechnet. Die Bilddatenverarbeitung der zu dem zugehörigen Bildbereich ROI4 enthaltenen Bilddaten erfolgt anschließend vorzugsweise in Abhängigkeit des berechneten Abstandes D. Falls sich das Fahrzeug F relativ zu festen Objekten, beispielsweise Gebäuden, während der Fahrt bewegt, kann ein derartiger Abstand D zu dem Mittelpunkt M des jeweiligen Bildbereichs kontinuierlich berechnet werden, um zwischen verschiedenen Bildverarbeitungsalgorithmen in Abhängigkeit des berechneten Abstandes D umzuschalten. Die Fahrzeugkameras 2-i des Fahrzeuges F liefern einen Strom von Kamerabildern bzw. Bildrahmen an die Datenverarbeitungseinheit 4 des Fahrerassistenzsystems 1. Bei einer möglichen Ausführungsform ändert sich der zugehörige Bildbereich ROI eines Objektes OBJ bei jedem neuen Bildrahmen innerhalb der Bildrahmensequenz, welche die Datenverarbeitungseinheit 4 des Fahrerassistenzsystems 1 von einer Fahrzeugkamera 2-i erhält.

Bei dem Fahrzeug F, welches über das Fahrerassistenzsystem 1 verfügt, kann es sich um ein Straßenfahrzeug innerhalb des Straßenverkehrs handeln. Die von den Kamerabildern gelieferten Bilddaten bzw. Kamerabilder werden in einem sogenannten Stitching zu einem zusammengesetzten Umgebungsbild, beispielsweise einem 360°-Rundumblick, zusammengesetzt, wobei die Kamerabilder vorzugsweise auf eine Projektionsfläche, insbesondere eine zweidimensionale Bodenfläche oder eine dreidimensionale schüsselförmige Projektionsfläche, zur Anzeige projiziert werden. Der in den verschiedenen Bildbereichen angewendete Bilddatenverarbeitungsalgorithmus, beispielsweise Hochpassfilterung oder Tiefpassfilterung, erfolgt vorzugsweise in Abhängigkeit von der ermittelten Distanz des Fahrzeugkoordinatenursprungs zu dem zugehörigen Objekt bzw. Hindernis in der Fahrzeugumgebung.

Figur 3 zeigt ein einfaches Ablaufdiagramm zur Darstellung eines Ausführungsbeispiels des erfindungsgemäßen Verfahrens zur Bilddatenverarbeitung eines Umgebungsbildes der Fahrzeugumgebung eines Fahrzeuges F.

In einem ersten Schritt S1 werden Kamerabilder, die von verschiedenen Fahrzeugkameras eines Fahrzeuges stammen, zu einem Umgebungsbild der Fahrzeugumgebung des Fahrzeuges zusammengesetzt. Anschließend erfolgt in einem Schritt S2 eine adaptive Bilddatenverarbeitung bei mindestens einem Bildbereich, welcher zu einem innerhalb des zusammengesetzten Umgebungsbildes enthaltenen Objekt gehört. Das in Figur 3 dargestellte Verfahren wird beispielsweise von einem Prozessor einer Bilddatenverarbeitungseinheit 4 eines Fahrerassistenzsystems 1 durchgeführt.

## Patentansprüche

1. Fahrerassistenzsystem (1) zur Anzeige eines Umgebungsbildes für ein Fahrzeug mit:
- Fahrzeugkameras (2), welche Kamerabilder einer Fahrzeugumgebung des Fahrzeuges (F) erzeugen; und mit
- einer Datenverarbeitungseinheit (4), welche die von den Fahrzeugkameras (2) erzeugten Kamerabilder zu einem Umgebungsbild der Fahrzeugumgebung zusammensetzt, wobei für mindestens ein innerhalb des Umgebungsbildes enthaltenes Objekt ein zugehöriger Bildbereich (ROI) adaptiv gefiltert wird, und wobei das zusammengesetzte Umgebungsbild mit den verarbeiteten Bildbereichen auf einer Anzeigeeinheit (5) des Fahrerassistenzsystems (1) angezeigt wird.

2. Fahrerassistenzsystem nach Anspruch 1,
wobei der zu einem Objekt zugehörige Bildbereich (ROI) durch ein Polygon gebildet wird, dessen Eckpunkte Koordinaten eines Fahrzeugkoordinatensystems des Fahrzeuges (F) sind.

3. Fahrerassistenzsystem nach einem der vorangehenden Ansprüche 1 bis 2,
wobei der zu einem Objekt zugehörige Bildbereich (ROI) durch ein Umfelddatenmodell der Fahrzeugumgebung des Fahrzeuges bestimmt wird.

4. Fahrerassistenzsystem nach einem der vorangehenden Ansprüche 1 bis 2,
wobei der zu einem Objekt zugehörige Bildbereich (ROI) durch einen Nutzer des Fahrerassistenzsystems (1) über eine Nutzerschnittstelle festgelegt wird.

5. Fahrerassistenzsystem nach einem der vorangehenden Ansprüche 1 bis 4,
wobei der zu einem Objekt zugehörige Bildbereich (ROI)hochpassgefiltert oder tiefpassgefiltert wird.

6. Fahrerassistenzsystem nach einem der vorangehenden Ansprüche 1 bis 4,
wobei der zu einem Objekt zugehörige Bildbereich (ROI) mit einer vorgegebenen zugehörigen Textur überdeckt wird.

7. Fahrerassistenzsystem nach einem der vorangehenden Ansprüche 1 bis 6,
wobei ein innerhalb des Umgebungsbildes enthaltenes Objekt anhand eines sensorisch erfassten Höhenprofils der Fahrzeugumgebung des Fahrzeuges (F) erkannt wird.

8. Fahrerassistenzsystem nach einem der vorangehenden Ansprüche 1 bis 7,
wobei ein innerhalb des Umgebungsbildes enthaltenes Objekt klassifiziert wird und die adaptive Bildverarbeitung des zu dem Objekt zugehörigen Bildbereichs in Abhängigkeit von der Klasse des Objektes durch die Datenverarbeitungseinheit (4) erfolgt.

9. Fahrerassistenzsystem nach einem der vorangehenden Ansprüche 1 bis 8,
wobei die adaptive Bildverarbeitung des zu einem Objekt zugehörigen Bildbereichs in Abhängigkeit von einem Abstand des Bildbereichs und/oder des Objektes zu einem Koordinatenursprung (KUP) eines Fahrzeugkoordinatensystems durch die Datenverarbeitungseinheit (4) erfolgt.

10. Verfahren zur Bilddatenverarbeitung eines Umgebungsbildes der Fahrzeugumgebung eines Fahrzeuges (F) zur Anzeige des Umgebungsbildes auf einer Anzeigeeinheit (5) eines Fahrerassistenzsystems (1) des Fahrzeugs (F) mit den Schritten:
(a) Zusammensetzen (S1) von Kamerabildern, die von Fahrzeugkameras (2) des Fahrzeuges (F) erzeugt werden, zu einem Umgebungsbild der Fahrzeugumgebung des Fahrzeuges (F);
(b) Durchführen (S2) einer adaptiven Filterung bei mindestens einem Bildbereich (ROI), welcher zu einem innerhalb des zusammengesetzten Umgebungsbildes enthaltenen Objekt gehört; und
(c) Anzeigen des zusammengesetzten Umgebungsbilds mit den verarbeiteten Bildbereichen auf der Anzeigeeinheit (5) des Fahrerassistenzsystems (1).

11. Verfahren nach Anspruch 10,
wobei der zu einem Objekt zugehörige Bildbereich durch ein Polygon gebildet wird, dessen Eckpunkte durch Koordinaten eines Fahrzeugkoordinatensystems des Fahrzeuges gebildet werden.

12. Verfahren nach Anspruch 10 oder 11,
wobei der zu einem Objekt zugehörige Bildbereich durch ein Umfelddatenmodell der Fahrzeugumgebung des Fahrzeuges bestimmt wird oder durch einen Nutzer des Fahrerassistenzsystems über eine Nutzerschnittstelle festgelegt wird.

13. Verfahren nach einem der vorangehenden Ansprüche 10 bis 11,
wobei der zu einem Objekt zugehörige Bildbereich hochpass- oder tiefpassgefiltert wird oder der zu dem Objekt zugehörige Bildbereich mit einer vorgegebenen zugehörigen Textur überdeckt wird.

14. Verfahren nach einem der vorangehenden Ansprüche 10 bis 13,
wobei ein innerhalb des Umgebungsbildes enthaltenes Objekt anhand eines sensorisch erfassten Höhenprofils der Fahrzeugumgebung des Fahrzeuges erkannt wird.

15. Verfahren nach einem der vorangehenden Ansprüche 10 bis 14,
wobei ein innerhalb des Umgebungsbildes enthaltenes Objekt klassifiziert wird und die adaptive Bildverarbeitung des zu dem Objekt zugehörigen Bildbereichs in Abhängigkeit von der Klasse des Objektes erfolgt.

16. Verfahren nach einem der vorangehenden Ansprüche 10 bis 15,
wobei die adaptive Bildverarbeitung des zu einem Objekt zugehörigen Bildbereichs in Abhängigkeit von einem Abstand des Bildbereichs oder des Objektes zu einem Koordinatenursprung eines Fahrzeugkoordinatensystems des Fahrzeuges erfolgt.

## Claims

1. Driver assistance system (1) for displaying an environment image for a vehicle, having:
- vehicle cameras (2), which produce camera images of a vehicle environment of the vehicle (F); and having
- a data processing unit (4), which combines the camera images produced by the vehicle cameras (2) to compose an environment image of the vehicle environment, wherein an associated image region (ROI) is adaptively filtered for at least one object contained within the environment image, and wherein the composed environment image is displayed with the processed image regions on a display unit (5) of the driver assistance system (1).

2. Driver assistance system according to Claim 1, wherein the image region (ROI) associated with an object is formed by a polygon whose corner points are coordinates of a vehicle coordinate system of the vehicle (F) .

3. Driver assistance system according to either of the preceding Claims 1 to 2,
wherein the image region (ROI) associated with an object is determined by a vicinity data model of the vehicle environment of the vehicle.

4. Driver assistance system according to one of the preceding Claims 1 to 2,
wherein the image region (ROI) associated with an object is established by a user of the driver assistance system (1) via a user interface.

5. Driver assistance system according to one of the preceding Claims 1 to 4,
wherein the image region (ROI) associated with an object is filtered using a high-pass filter or low-pass filter.

6. Driver assistance system according to one of the preceding Claims 1 to 4,
wherein the image region (ROI) associated with an object is covered by a specified associated texture.

7. Driver assistance system according to one of the preceding Claims 1 to 6,
wherein an object contained within the environment image is detected on the basis of a height profile of the vehicle environment of the vehicle (F) that is captured by way of sensor.

8. Driver assistance system according to one of the preceding Claims 1 to 7,
wherein an object contained within the environment image is classified and the adaptive image processing of the image region associated with the object is effected by the data processing unit (4) in dependence on the class of the object.

9. Driver assistance system according to one of the preceding Claims 1 to 8,
wherein the adaptive image processing of the image region associated an object is effected by the data processing unit (4) in dependence on a distance of the image region and/or of the object from a coordinate origin (KUP) of a vehicle coordinate system.

10. Method for image processing an environment image of the vehicle environment of a vehicle (F) for displaying the environment image on a display unit (5) of a driver assistance system (1) of the vehicle (F), having the steps of:
(a) combining (S1) camera images, which are produced by vehicle cameras (2) of the vehicle (F), to compose an environment image of the vehicle environment of the vehicle (F);
(b) performing (S2) adaptive filtering in at least one image region (ROI), which is associated with an object contained within the composed environment image;
(c) displaying the composed environment image with the processed image regions on the display unit (5) of the driver assistance system (1).

11. Method according to Claim 10,
wherein the image region associated with an object is formed by a polygon whose corner points are formed by coordinates of a vehicle coordinate system of the vehicle.

12. Method according to Claim 10 or 11,
wherein the image region associated with an object is determined by a vicinity data model of the vehicle environment of the vehicle or is established by a user of the driver assistance system via a user interface.

13. Method according to one of the preceding Claims 10 to 11,
wherein the image region associated with an object is filtered using a high-pass filter or a low-pass filter or the image region associated with the object is covered by a specified associated texture.

14. Method according to one of the preceding Claims 10 to 13,
wherein an object contained within the environment image is detected on the basis of a height profile of the vehicle environment of the vehicle that is captured by way of sensor.

15. Method according to one of the preceding Claims 10 to 14,
wherein an object contained within the environment image is classified and the adaptive image processing of the image region associated with the object is effected in dependence on the class of the object.

16. Method according to one of the preceding Claims 10 to 15,
wherein the adaptive image processing of the image region associated with an object is effected in dependence on a distance of the image region or of the object from a coordinate origin of a vehicle coordinate system of the vehicle.

## Revendications

1. Système d'assistance au conducteur (1) destiné à afficher une image de l'environnement pour un véhicule, comprenant :
- des caméras de véhicule (2), lesquelles génèrent des images de caméra d'un environnement de véhicule du véhicule (F) ; et comprenant
- une unité de traitement de données (4), laquelle assemble les images de caméra générées par les caméras de véhicule (2) en une image d'environnement de l'environnement de véhicule, une zone d'image (ROI) associée étant filtrée de manière adaptative pour au moins un objet contenu à l'intérieur de l'image d'environnement, et l'image d'environnement assemblée avec les zones d'image traitées étant affichée sur une unité d'affichage (5) du système d'assistance au conducteur (1).

2. Système d'assistance au conducteur selon la revendication 1, la zone d'image (ROI) associée à un objet étant formée par un polygone dont les coins sont les coordonnées d'un système de coordonnées de véhicule du véhicule (F).

3. Système d'assistance au conducteur selon l'une des revendications précédentes 1 à 2, la zone d'image (ROI) associée à un objet étant déterminée par un modèle de données d'environnement de l'environnement de véhicule du véhicule.

4. Système d'assistance au conducteur selon l'une des revendications précédentes 1 à 2, la zone d'image (ROI) associée à un objet étant spécifiée par un utilisateur du système d'assistance au conducteur (1) par le biais d'une interface utilisateur.

5. Système d'assistance au conducteur selon l'une des revendications précédentes 1 à 4, la zone d'image (ROI) associée à un objet étant soumise à un filtrage passe-haut ou à un filtrage passe-bas.

6. Système d'assistance au conducteur selon l'une des revendications précédentes 1 à 4, la zone d'image (ROI) associée à un objet étant recouverte avec une texture associée prédéfinie.

7. Système d'assistance au conducteur selon l'une des revendications précédentes 1 à 6, un objet qui se trouve à l'intérieur de l'image d'environnement étant reconnu à l'aide d'un profil de hauteur acquis par détection de l'environnement de véhicule du véhicule (F).

8. Système d'assistance au conducteur selon l'une des revendications précédentes 1 à 7, un objet qui se trouve à l'intérieur de l'image d'environnement étant classifié et le traitement d'image adaptatif de la zone d'image associée à l'objet étant effectué par l'unité de traitement de données (4) en fonction de la classe de l'objet.

9. Système d'assistance au conducteur selon l'une des revendications précédentes 1 à 8, le traitement d'image adaptatif de la zone d'image associée à l'objet étant effectué par l'unité de traitement de données (4) en fonction d'un écart entre la zone d'image et/ou de l'objet et une origine des coordonnées (KUP) d'un système de coordonnées de véhicule.

10. Procédé de traitement d'image d'une image d'environnement de l'environnement de véhicule d'un véhicule (F) en vue de l'affichage de l'image d'environnement sur une unité d'affichage (5) d'un système d'assistance au conducteur (1) du véhicule (F), comprenant les étapes suivantes :
(a) assemblage (S1) d'images de caméra, qui sont générées par des caméras de véhicule (2) du véhicule (F), en une image d'environnement de l'environnement de véhicule du véhicule (F) ;
(b) réalisation (S2) d'un filtrage adaptatif au niveau d'au moins une zone d'image (ROI), laquelle appartient à un objet contenu à l'intérieur de l'image d'environnement assemblée ; et
(c) affichage de l'image d'environnement avec les zones d'image traitées sur l'unité d'affichage (5) du système d'assistance au conducteur (1).

11. Procédé selon la revendication 10, la zone d'image associée à un objet étant formée par un polygone dont les coins sont formés par les coordonnées d'un système de coordonnées de véhicule du véhicule.

12. Procédé selon la revendication 10 ou 11, la zone d'image associée à un objet étant déterminée par un modèle de données d'environnement de l'environnement de véhicule du véhicule ou spécifiée par un utilisateur du système d'assistance au conducteur par le biais d'une interface utilisateur.

13. Procédé selon l'une des revendications précédentes 10 à 11, la zone d'image associée à un objet étant soumise à un filtrage passe-haut ou à un filtrage passe-bas ou la zone d'image associée à un objet étant recouverte avec une texture associée prédéfinie.

14. Procédé selon l'une des revendications précédentes 10 à 13, un objet qui se trouve à l'intérieur de l'image d'environnement étant reconnu à l'aide d'un profil de hauteur acquis par détection de l'environnement de véhicule du véhicule.

15. Procédé selon l'une des revendications précédentes 10 à 14, un objet qui se trouve à l'intérieur de l'image d'environnement étant classifié et le traitement d'image adaptatif de la zone d'image associée à l'objet étant effectué en fonction de la classe de l'objet.

16. Procédé selon l'une des revendications précédentes 10 à 15, le traitement d'image adaptatif de la zone d'image associée à l'objet étant effectué en fonction d'un écart entre la zone d'image ou l'objet et une origine des coordonnées d'un système de coordonnées de véhicule du véhicule.
